# EUROPEAN PATENT SPECIFICATION

(11) **EP 2 444 156 B1**
(45) Date of publication and mention of the grant of the patent: **12.06.2013**
(21) Application number: 11182693.9
(22) Date of filing: 26.09.2011
(51) Int. Cl.: B01J 35/04, B01D 53/92, F01N 3/00

(54) **Method of manufacturing honeycomb structure**
Herstellungsverfahren für eine Wabenstruktur
Procédé de fabrication de structure en nid d'abeille

(30) Priority: 25.10.2010 WO PCT/JP2010/069242
(43) Date of publication of application: 25.04.2012
(73) Proprietor: Ibiden Co., Ltd., Ogaki-shi Gifu 503-8604 (JP)
(72) Inventor: Abe, Toshiyasu, Ibi-Gun Gifu 501-0695 (JP); Umemoto, Takehiro, Ibi-Gun Gifu 501-0695 (JP)
(74) Representative: HOFFMANN EITLE

(56) References cited:
- EP-A2- 2 050 728
- EP-A2- 2 147 722

## Description

### BACKGROUND OF THE INVENTION

### 1. Field of the Invention

The present invention relates to a method of manufacturing a honeycomb structure that treats exhaust gas.

### 2. Description of the Related Art

A large number of techniques have been developed in relation to conversion of automobile exhaust gas. With an increase in traffic, however, countermeasures taken against exhaust gas have hardly been satisfactory. Not only in Japan but also globally, is automobile emission control going to be further tightened.

In order to meet such control, catalyst supports capable of treating predetermined components contained in exhaust gas are used in exhaust gas converting systems. Further, a honeycomb structure is known as a member for such catalyst supports.

This honeycomb structure is formed of a honeycomb unit that has, for example, multiple cells (through holes) extending from one end face to another end face of the honeycomb structure along its longitudinal directions. These cells are separated from each other by cell walls supporting a catalyst or cell walls formed of a catalyst. Accordingly, in the case of causing exhaust gas to flow through such a honeycomb structure, substances contained in the exhaust gas, such as HC, CO, and/or NOx, are converted by the catalyst supported by the cell walls or the catalyst forming the cell walls, so that these toxic components in the exhaust gas may be treated.

In particular, in systems called SCR (Selective Catalytic Reduction) systems, it is possible to decompose NOx in exhaust gas into nitrogen and water using ammonia. For example, Patent Document 1 discloses a honeycomb structure having a honeycomb unit containing zeolite usable in SCR systems.

### [Prior Art Document]

### [Patent Document]

[Patent Document 1] International Publication Number WO 09/141897 pamphlet

Usually, the honeycomb structure is manufactured by, for example, joining multiple honeycomb units containing inorganic particles by interposing an adhesive layer to obtain a honeycomb unit aggregate, and thereafter cutting this honeycomb unit aggregate along a predetermined shape on its outer peripheral surface side. The adhesive layer is formed by, for example, applying paste (adhesive layer paste) containing water, inorganic particles (for example, silica particles), a binder, etc., on side surfaces of the honeycomb units and thereafter drying, degreasing, and solidifying this paste. (See the honeycomb structure of Patent Document 1.)

Here, in the case of using particles having multiple micropores and a relatively large specific surface area (for example, 50 m²/g or more) as the inorganic particles forming the honeycomb units, a problem may be caused in that on application of the paste for the adhesive layer on side surfaces of the honeycomb units, moisture in the adhesive layer paste is absorbed into the micropores of the inorganic particles of the honeycomb units.

With the occurrence of such a transfer of moisture from the adhesive layer paste side to the honeycomb unit side, particles in the adhesive layer paste also are transferred to the surfaces of the honeycomb units. As a result, in the adhesive layer finally obtained, the inorganic particles (for example, silica particles) are large in number near the interface with the honeycomb units and small in number in the center part. That is, the adhesive layer has an uneven density distribution of inorganic particles (for example, silica particles) along thickness directions (directions perpendicular to the longitudinal directions of the honeycomb units). Further, if this tendency becomes excessive, the problem may be caused that cavities are caused near the center part of the adhesive layer to reduce the strength of the adhesive layer.

### SUMMARY OF THE INVENTION

The present invention has been made in view of such a problem, and has an object of providing a method of manufacturing a honeycomb structure in which cavities are less likely to be caused in the adhesive layer than in the conventional honeycomb structure.

According to the present invention, a method of manufacturing a honeycomb structure including a plurality of honeycomb units, the honeycomb units each containing inorganic particles and having a plurality of cells extending from a first end face to a second end face of the honeycomb unit along a longitudinal direction thereof and separated by a plurality of cell walls, is characterized by the steps of (a) preparing the honeycomb units each having at least one joining surface on which adhesive layer paste is to be provided; (b) impregnating at least a part of the at least one joining surface of each of the honeycomb units with water; (c) preparing the adhesive layer paste containing at least inorganic particles, a binder, and water; (d) applying the adhesive layer paste on the at least one joining surface of at least one of the honeycomb units and joining the honeycomb units to each other; and (e) forming an adhesive layer by drying, degreasing, and solidifying the adhesive layer paste, wherein the inorganic particles of the honeycomb units have a specific surface area of 50 m²/g or more, and the water with which at least the part of the at least one joining surface of each of the honeycomb units is impregnated in step (b) is removed in step (e).

Here, in the method of manufacturing a honeycomb structure according to the present invention, the at least one joining surface of each of the honeycomb units may be entirely impregnated with the water in step (b).

Further, in the method of manufacturing a honeycomb structure according to the present invention, an amount of the water with which each of the honeycomb units is impregnated in step (b) is preferably 0.01 g/cm² to 0.05 g/cm² per joining surface of each of the honeycomb units.

Further, in the method of manufacturing a honeycomb structure according to the present invention, step (b) is preferably performed by spraying each of the honeycomb units with the water.

Further, in the method of manufacturing a honeycomb structure according to the present invention, the inorganic particles contained in the honeycomb units may contain zeolite.

Further, in the method according to the present invention, the honeycomb units preferably have an average pore size of 0.01 µm to 1.0 µm.

Further, in the method of manufacturing a honeycomb structure according to the present invention, the inorganic particles of the adhesive layer paste may contain alumina particles or silica particles.

Further, in the method according to the present invention, the adhesive layer paste may further contain inorganic fibers.

Further, in the method of manufacturing a honeycomb structure according to the present invention, the adhesive layer paste is preferably solidified at a temperature of 500 °C to 900 °C in step (e).

According to the present invention, it is possible to provide a method of manufacturing a honeycomb structure in which cavities are less likely to be caused in the adhesive layer than in the conventional honeycomb structure.

### BRIEF DESCRIPTION OF THE DRAWINGS

FIG. 1 is a schematic perspective view of a honeycomb structure of the present invention.
FIG. 2 is a schematic perspective view of a honeycomb unit that is a component of the honeycomb structure of FIG. 1.
FIG. 3 is a photograph of a cross section of the part of the adhesive layer of a conventional honeycomb structure (Comparative Example 1).
FIG. 4 is a flowchart illustrating a method of manufacturing a honeycomb structure according to the present invention.
FIG. 5 is a perspective view schematically illustrating how test pieces are cut out of a honeycomb unit assembly.
FIG. 6 is a schematic diagram illustrating a joining strength evaluation test using the test pieces.
FIG. 7 is a photograph of a cross section of the part of a honeycomb structure (Example 1) of the present invention.

### DETAILED DESCRIPTION OF THE PREFERRED EMBODIMENTS

A description is given below, based on the drawings, of features of the present invention.

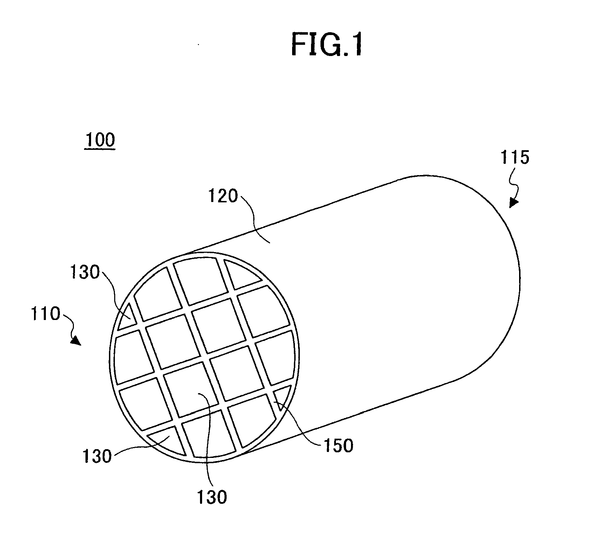

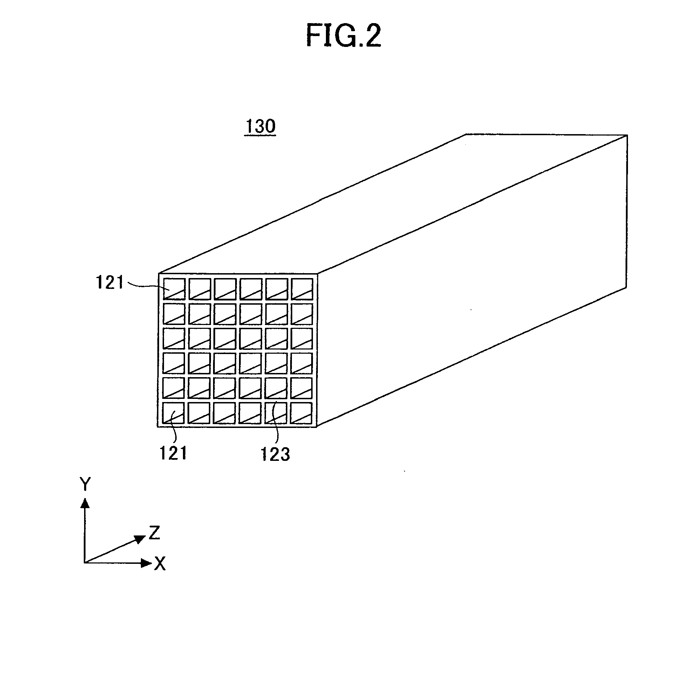

FIG. 1 schematically illustrates a honeycomb structure according to the present invention. Further, FIG. 2 schematically illustrates a honeycomb unit, which is a component of the honeycomb structure illustrated in FIG. 1.

As illustrated in FIG. 1, a honeycomb structure 100 has two end faces 110 and 115. Further, usually, the honeycomb structure 100 has an outer peripheral coat layer 120 formed at its outer peripheral surface except for the end faces 110 and 115.

The honeycomb structure 100 is formed by, for example, joining multiple pillar ceramic honeycomb units 130 illustrated in FIG. 2 (16 units in a four-by-four matrix in the case of FIG. 1) by interposing an adhesive layer 150 and thereafter cutting the outer periphery along a predetermined shape (a cylindrical shape in the case of FIG. 1).

As illustrated in FIG. 2, the honeycomb unit 130 includes multiple cells (through holes) 121, extending from one end to another end of the honeycomb unit 130 along its longitudinal direction and open at the end faces, and cell walls 123 separating the cells 121. In the nonlimiting case of FIG. 2, the cross sections of the cells 121 perpendicular to the longitudinal direction (Z direction) are substantially square.

The honeycomb unit 130 (the cell walls 123 of the honeycomb unit 130) includes inorganic particles.

In the case of using alumina, silica, titania, ceria, zirconia, mullite, zeolite, etc., as the inorganic particles included in a honeycomb unit, a honeycomb structure (a catalyst support) having such a honeycomb unit may be used as a catalyst support for converting CO, HC, NOx, etc. In particular, a honeycomb structure having a honeycomb unit that uses zeolite as inorganic particles may be used for a urea SCR system having a urea tank.

For example, in such a urea SCR system, when exhaust gas is caused to flow through the system, the urea contained in the urea tank reacts with water in the exhaust gas to generate ammonia (Eq. (1)):

CO(NH₂)₂ + H₂O → 2NH₃ + CO₂. (1)

When this ammonia, together with exhaust gas including NOx, flows into each cell 121 from one of the end faces 110 and 115 (for example, the end face 110) of the honeycomb structure 100, the reactions of the following Eqs. (2-1) and (2-2) are caused by the action of the catalyst such as zeolite included in the cell walls 123:

4NH₃ + 4NO + O₂ → 4N₂ + 6H₂O, (2-1)

8NH₃ + 6NO₂ → 7N₂ + 12H₂O. (2-2)

Thereafter, the converted exhaust gas is discharged from another one of the end faces 110 and 115 (for example, the end face 115) of the honeycomb structure 100. Thus, by causing exhaust gas to flow inside the honeycomb structure 100, NOx in the exhaust gas can be treated.

As described above, the honeycomb structure 100 is manufactured by joining the honeycomb units 130 by interposing the adhesive layer 150 and thereafter cutting the outer peripheral side along a predetermined shape. The adhesive layer 150 is formed by applying adhesive layer paste containing water, inorganic particles (for example, alumina particles, silica particles, etc.), a binder, etc., on side surfaces of the honeycomb units except their end faces, and thereafter drying, degreasing, and solidifying the adhesive layer paste.

Here, in the case of using particles having multiple micropores and a relatively large specific surface area (for example, 50 m²/g or more) as the inorganic particles forming the honeycomb units 130, a problem may be caused in that on application of the paste for the adhesive layer 150 on side surfaces of the honeycomb units 130, moisture in the adhesive layer paste is absorbed into the micropores of the inorganic particles of the honeycomb units 130.

With the occurrence of such a transfer of moisture from the adhesive layer paste side to the honeycomb unit 130 side, particles in the adhesive layer paste also are transferred to the surfaces of the honeycomb units 130. As a result, in the adhesive layer 150 finally obtained, the inorganic particles are large in number near the interface with the honeycomb units 130 and small in number in the center part. That is, the adhesive layer 150 has an uneven density distribution of inorganic particles along thickness directions. Further, if this tendency becomes excessive, the problem may be caused that cavities are caused near the center part of the adhesive layer 150 to reduce the strength of the adhesive layer 150.

A larger specific surface area of the inorganic particles of the honeycomb units 130 is more desirable. The upper limit of the specific surface area of the inorganic particles of the honeycomb units 130 is, for example, 600 m²/g.

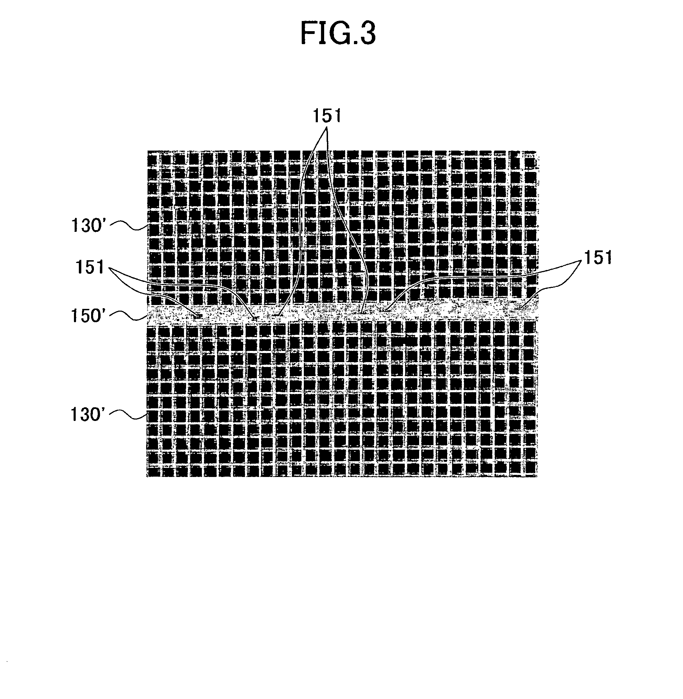

FIG. 3 illustrates a photograph of a cross section of the part of the adhesive layer of the conventional honeycomb structure manufactured by the conventional method. It is shown that in the conventional honeycomb structure manufactured by the conventional method, many cavities such as cavities 151 are caused near the center part of an adhesive layer 150' in its thickness directions as a result of the transfer of the components of the adhesive layer paste to the honeycomb unit 130' side as illustrated in FIG. 3.

The presence of such cavities in the adhesive layer 150 would cause reduction in the joining strength of the honeycomb units 130.

On the other hand, according to the present invention, it is possible to obtain a honeycomb structure in which the problem of the presence of cavities near the center part of the adhesive layer 150 is reduced or eliminated. That is, according to the method of manufacturing a honeycomb structure according to the present invention, as illustrated in detail below, it is possible to obtain a honeycomb structure in which the transfer of inorganic particles in adhesive layer paste to the honeycomb unit surface side is controlled to make cavities less likely to be caused near the center part of the adhesive layer 150 so that reduction in the strength of the adhesive layer 150 is significantly controlled.

### [Configuration of the Honeycomb Structure 100]

Next, a brief description is given of members of the honeycomb structure 100 illustrated in FIG. 1.

### [Honeycomb Unit 130]

The honeycomb unit 130 contains inorganic particles and an inorganic binder. The honeycomb unit 130 may further contain inorganic fibers.

The inorganic particles contained in the honeycomb unit 130 may be, but are not limited to, alumina, silica, titania, ceria, zirconia, mullite, and/or zeolite, etc.

Examples of zeolite include β-zeolite, zeolite Y, ferrierite, zeolite ZSM-5, mordenite, faujasite, zeolite A, zeolite L, and structural analogs of zeolite. Preferred structural analogs of zeolite may be ALPO (aluminophosphate), SAPO (silico-aluminophosphate) and the like. Further, zeolite may have Fe, Cu, Ni, Co, Zn, Mn, Ti, Ag, V, etc., introduced therein through ion exchange. Of these elements, Fe or Cu is particularly preferable because of an excellent NOx conversion characteristic.

The inorganic binder contained in the honeycomb unit 130 is desirably a solids content of at least one selected from the group consisting of alumina sol, silica sol, titania sol, water glass, sepiolite, attapulgite, and boehmite.

Of the amount of the inorganic particles contained in the honeycomb unit 130, the lower limit is desirably 30 wt%, more desirably 40 wt%, and still more desirably 50 wt%, while the upper limit is desirably 90 wt%, more desirably 80 wt%, and still more desirably 75 wt%. If the inorganic particles content is less than 30 wt%, the amount of zeolite contributing to conversion of exhaust gas is relatively reduced. On the other hand, if the inorganic particles content exceeds 90 wt%, the inorganic binder contributing to the strength of the honeycomb unit 130 is relatively reduced in amount, so that the strength of the honeycomb unit 130 is reduced.

Further, in the case of adding inorganic fibers to the honeycomb unit 130, alumina, silica, silicon carbide, silica-alumina, glass, potassium titanate, aluminum borate or the like is desirable as the inorganic fibers. These may be used alone or in combination. Of the above-described inorganic fibers, alumina is desirable.

The cell density of the honeycomb unit 130 is preferably in the range of 15.5-186 cells/cm² (100-1200 cpsi), more preferably in the range of 46.5-170 cells/cm² (300-1100 cpsi), and still more preferably in the range of 62-155 cells/cm² (400-1000 cpsi).

The thickness of the cell walls 123 of the honeycomb unit 130 is not limited in particular, but has a desirable lower limit of 0.1 mm in terms of the strength of the honeycomb unit 130 and has a desirable upper limit of 0.4 mm in terms of exhaust gas conversion performance.

The average pore size of the honeycomb unit 130 is preferably in the range of 0.01 µm to 1.0 µm. If the average pore size of the honeycomb unit 130 is less than 0.01 µm, exhaust gas is prevented from penetrating sufficiently into the cell walls 123 so that the exhaust gas conversion performance is reduced. On the other hand, if the average pore size of the honeycomb unit 130 exceeds 1.0 µm, the contact points of the inorganic binder and the inorganic particles are reduced, so that the strength of the honeycomb unit 130 is reduced.

The porosity of the honeycomb unit 130 is preferably 20% to 60%.

### [Adhesive Layer 150]

The adhesive layer 150 of the honeycomb structure 100 is formed using adhesive layer paste as a raw material as described above.

The adhesive layer 150 is preferably 0.3 mm to 2.0 mm in thickness. This is because if the adhesive layer 150 is less than 0.3 mm in thickness, the joining strength of the honeycomb units 130 is not sufficient. Further, if the adhesive layer 150 exceeds 2.0 mm in thickness, the pressure loss of the honeycomb structure 100 increases. The number of honeycomb units 130 to be joined is suitably determined in accordance with the size of the honeycomb structure 100.

### [Outer Peripheral Coat Layer 120]

Outer peripheral coat layer paste for forming the outer peripheral coat layer 120 of the honeycomb structure 100 may be the same in material as or different in material from the adhesive layer paste. A pore-forming agent such as balloons, which are minute hollow balls whose component is oxide-based ceramic, spherical resin, or graphite may be added as required to the adhesive layer paste and/or the outer peripheral coat layer paste serving as a raw material. The final thickness of the outer peripheral coat layer 120 is preferably 0.1 mm to 2.0 mm. If the outer peripheral coat layer 120 is less than 0.1 mm in thickness, the strength of the outer peripheral coat layer 120 is not sufficient. Further, if the outer peripheral coat layer 120 exceeds 2.0 mm in thickness, the pressure loss of the honeycomb structure 100 increases.

### [Method of Manufacturing a Honeycomb Structure according to the Present Invention]

A description is given below of a method of manufacturing a honeycomb structure according to the present invention.

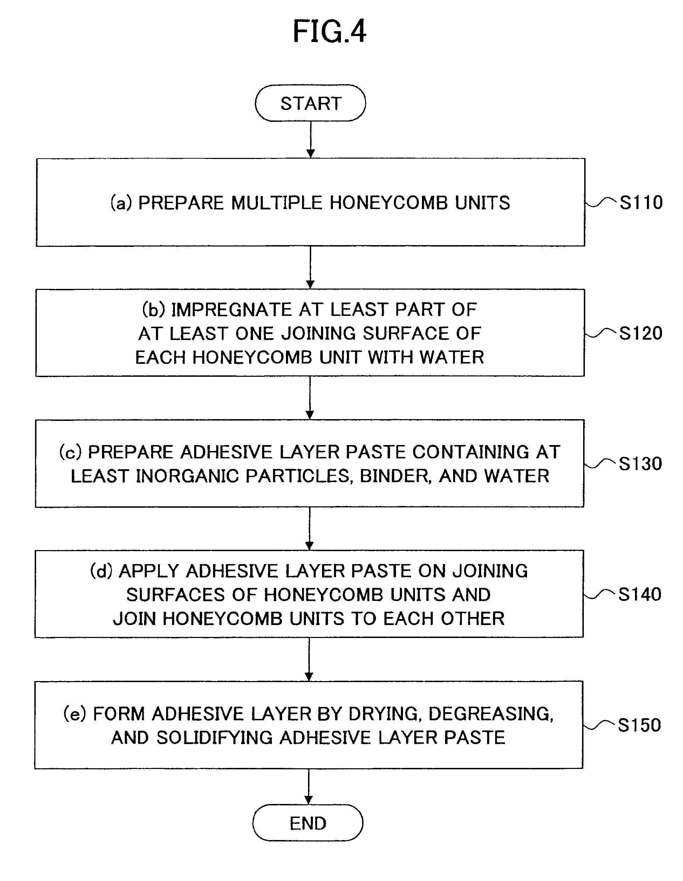

FIG. 4 illustrates a flowchart of a method of manufacturing a honeycomb structure according to the present invention. As illustrated in FIG. 4, the method of manufacturing a honeycomb structure according to the
present invention includes:
(a) the process of preparing multiple honeycomb units (step S110):
(b) the process of impregnating at least part of at least one joining surface of each honeycomb unit with water (step S120);
(c) the process of preparing adhesive layer paste containing at least inorganic particles, a binder, and water (step S130);
(d) the process of applying the adhesive layer paste on the joining surfaces of the honeycomb units and joining the honeycomb units (step S140); and
(e) the process of obtaining an adhesive layer by drying, degreasing, and solidifying the adhesive layer paste (step S150).

A description is given below of each of the processes.

### [Step S110]

First, multiple honeycomb units are prepared by the following method.

First, molded bodies for honeycomb units are manufactured by performing extrusion molding using raw material paste containing inorganic particles and an inorganic binder as principal components and inorganic fibers added as required.

As described above, examples of the inorganic particles include alumina, silica, titania, ceria, zirconia, mullite, and/or zeolite, etc.

The specific surface area of the inorganic particles is not limited in particular. According to the present invention, however, a cavity reduction effect more remarkable than the conventional one is produced in the case of using inorganic particles having multiple micropores, for example, inorganic particles having a specific surface area of 50 m²/g or more.

In addition to these, an organic binder, a dispersion medium, a molding aid, etc., may be suitably added to the raw material paste in accordance with moldability. The organic binder is not limited in particular. Examples of the organic binder include methylcellulose, carboxymethylcellulose, hydroxyethylcellulose, polyethylene glycol, phenolic resin, epoxy resin, etc. The amount of the organic binder blended is preferably 1 to 10 parts by weight to the total of 100 parts by weight of the inorganic particles and the inorganic binder.

The dispersion medium is not limited in particular, and may be, for example, water, an organic solvent (such as benzene), alcohol (such as methanol), etc. The molding aid is not limited in particular, and may be, for example, ethylene glycol, dextrin, a fatty acid, fatty acid soap, polyalcohol, etc.

The raw material paste is not limited in particular, and is preferably subjected to mixing and kneading. For example, the raw material paste may be mixed using a mixer, an attritor or the like, and may be well kneaded with a kneader or the like. The method of molding the raw material paste is not limited in particular. It is preferable, for example, to form the raw material paste into a honeycomb shape having cell walls by extrusion molding or the like.

Next, it is preferable to dry the obtained molded bodies. The drying apparatus used for drying is not limited in particular, and may be a microwave drying apparatus, a hot air drying apparatus, a dielectric drying apparatus, a reduced-pressure drying apparatus, a vacuum drying apparatus, a freeze drying apparatus, etc. Further, it is preferable to degrease the obtained dried molded bodies. The conditions for degreasing, which are not limited in particular and are suitably determined in accordance with the kind and amount of the organic matter included in the molded bodies, are preferably approximately 400 °C and two hours.

Next, the obtained degreased molded bodies are subjected to firing, so that honeycomb units are manufactured. The condition for firing, which is not limited in particular, is preferably 600 °C to 1200 °C, and more preferably, 600 °C to 1000 °C. This is because if the firing temperature is less than 600 °C, condensation polymerization through the inorganic binder is prevented from progressing so that the strength of the honeycomb units is reduced, and if the firing temperature exceeds 1200 °C, the sintering of zeolite excessively progresses to reduce the reaction sites of zeolite so that the rate of conversion of exhaust gas is reduced.

### [Step S120]

Next, of the side surfaces of the honeycomb units to be joined in subsequent step S140, those to be joined to other honeycomb units (hereinafter referred to as "joining side surfaces") are impregnated with water. This process is performed in order to prevent the density of the inorganic particles from being non-uniform along the thickness directions in the adhesive layer to be finally obtained. That is, performing this process controls a problem in that in subsequent step S140, on application of adhesive layer paste on the joining side surfaces of the honeycomb units, the moisture contained in the adhesive layer paste penetrates to the side of the honeycomb units and with this movement of the moisture, inorganic particles in the adhesive layer paste move toward the interface between the adhesive layer paste and the honeycomb units.

The process of impregnating the joining side surfaces of the honeycomb units with water may be performed in any manner. For example, this process may be performed by spraying water on at least the entire joining side surfaces of the honeycomb units.

Further, water may be applied with a brush or water may be applied with a sponge, a fiber body, paper, cloth or the like that contains water. The joining side surfaces of the honeycomb units may also be impregnated with water by immersing the honeycomb units in water for a predetermined period of time or keeping the honeycomb units in a humidistat (a constant temperature chamber) for a predetermined period of time while masking portions not to be impregnated with water.

The amount of water to be contained in the joining side surfaces of the honeycomb units is preferably in the range of 0.007 g/cm² to 0.050 g/cm² per honeycomb unit surface, more preferably in the range of 0.01 g/cm² to 0.05 g/cm² per honeycomb unit surface, still more preferably in the range of 0.04 g/cm² to 0.05 g/cm² per honeycomb unit surface, and further more preferably in the range of 0.043 g/cm² to 0.050 g/cm² per honeycomb unit surface. If the amount of water to be contained in the joining side surfaces of the honeycomb units is less than 0.007 g/cm² per honeycomb unit surface, the micropores of the inorganic particles of the honeycomb units are not sufficiently filled with water, so that the moisture contained in the adhesive layer paste penetrates to the side of the honeycomb units to cause cavities near the center part of the adhesive layer. On the other hand, if the amount of water to be contained in the joining side surfaces of the honeycomb units exceeds 0.050 g/cm² per honeycomb unit surface, the micropores of the inorganic particles of the honeycomb units are saturated with water, thus causing a problem in that the presence of excess water around the inorganic particles prolongs the process of drying the adhesive layer paste.

By impregnating the entirety of each of the joining side surfaces of the honeycomb units with water, the micropores of the inorganic particles of the honeycomb units are filled with water.

According to the present invention, the water impregnation process may be, but does not necessarily have to be, performed on the entirety of a joining side surface of a honeycomb unit. That is, even when the water impregnation process is performed on only part of a joining side surface of a honeycomb unit, it is still possible to reduce cavities to be caused in the adhesive layer compared with the conventional case.

### [Step S130]

Next, the adhesive layer paste is prepared.

The adhesive layer paste contains at least inorganic particles, a binder (an organic binder and/or an inorganic binder), and water. The adhesive layer paste may further contain inorganic fibers.

Examples of the inorganic particles used include alumina particles, silica particles, titania particles, zirconia particles, mullite particles, and/or zeolite particles, etc.

The organic binder is not limited in particular, and is one or more selected from, for example, polyvinyl alcohol, methylcellulose, ethylcellulose, carboxymethylcellulose, etc. Among organic binders, carboxymethylcellulose is desirable.

The inorganic binder is not limited in particular, and is, for example, alumina sol, silica sol, titania sol, water glass, clay, kaolin, montmonrillonite, sepiolite, attapulgite, boehmite, etc. These may be used alone or in combination.

Of these, at least one selected from the group consisting of alumina sol, silica sol, titania sol, water glass, sepiolite, attapulgite, and boehmite is desirable.

As the material of the inorganic fibers, which is not limited in particular, for example, alumina, silica, silicon carbide, silica-alumina, glass, potassium titanate, aluminum borate or the like is used.

### [Step S140]

Next, the honeycomb units are joined by interposing the adhesive layer paste.

As is clear from step S120 described above, water is already contained in the micropores of the inorganic particles of the honeycomb units. Therefore, even when the adhesive layer paste is applied on the joining side surfaces of the honeycomb units in this process, the moisture contained in the adhesive layer paste is prevented from moving to the honeycomb unit side because the inorganic particles of the honeycomb units have their micropores so filled with water as to be unable to absorb more water. Accordingly, the inorganic particles contained in the adhesive layer paste also are prevented from moving, so that the density of the inorganic particles is prevented from being non-uniform along the thickness directions of the adhesive layer paste.

A necessary number of honeycomb units are joined by interposing the adhesive layer paste, so that a honeycomb unit aggregate is manufactured. In the case of joining multiple honeycomb units, each honeycomb unit has at least one joining side surface. That is, joining multiple honeycomb units may include the case where each honeycomb unit has one joining side surface, that is, the case of joining two honeycomb units. In this case, the adhesive layer paste is applied on one of the joining side surfaces, and the honeycomb units are joined to have the adhesive layer paste (adhesive layer) provided (formed) on both joining side surfaces.

### [Step S150]

Finally, the adhesive layer paste is dried, degreased, and solidified. At this point, the water with which the joining side surfaces of the honeycomb units have been impregnated by the above-described process (step S120) is also removed.

The temperature for drying, degreasing, and solidifying is not limited in particular, and is preferably, for example, in the range of 500 °C to 900 °C. If the temperature for drying, degreasing, and solidifying is less than 500 °C, the condensation polymerization of the inorganic particles and/or inorganic fibers contained in the honeycomb units and the adhesive layer paste through the inorganic binders is prevented from progressing, so that the joining strength of the adhesive layer paste is reduced. On the other hand, if the temperature for drying, degreasing, and solidifying exceeds 900 °C, in the case where the inorganic particles contained in the honeycomb units are, for example, zeolite, the sintering of zeolite progresses to reduce reaction sites that contribute to conversion of exhaust gas, so that the exhaust gas conversion performance is reduced.

As a result, the adhesive layer paste is solidified, so that the adhesive layer is formed. As described above, the non-uniformity of the inorganic particle density along the thickness directions of the adhesive layer paste is significantly controlled. Therefore, the density of the inorganic particles is less likely to be non-uniform in the finally obtained adhesive layer as well. Thus, according to the method of manufacturing a honeycomb structure of the present invention, the generation of cavities near the center part of the adhesive layer is significantly controlled, so that it is possible to prevent reduction in joining strength in the part of the adhesive layer.

The outer periphery of the honeycomb unit aggregate into which a necessary number of honeycomb units are joined to each other by interposing the adhesive layer paste is cut, for example, cylindrically using a diamond cutter, etc., as required after the drying of the honeycomb unit aggregate. As a result, a honeycomb structure having a desired shape is manufactured.

An outer peripheral coat layer is formed at the outer peripheral surface of the honeycomb structure if needed.

The honeycomb structure may also be manufactured in the following manner.

A honeycomb unit aggregate into which a necessary number of honeycomb units are joined to each other by interposing the adhesive layer paste is manufactured, and the adhesive layer paste is dried. The outer periphery of the honeycomb unit aggregate with the dried adhesive layer paste is cut into a predetermined shape using a diamond cutter.

Next, outer peripheral coat layer paste is applied on the outer peripheral part of the cut honeycomb unit aggregate.

After the application of the outer peripheral coat layer paste on the outer peripheral surface of the honeycomb unit aggregate, the outer peripheral coat layer paste is dried, and the outer peripheral coat layer paste and the adhesive layer paste are degreased and solidified. The temperature for drying the outer peripheral coat layer paste and degreasing and solidifying the outer peripheral coat layer paste and the adhesive layer paste is not limited in particular, and may be, for example, in the range of 500 °C to 900 °C. If the temperature for drying the outer peripheral coat layer paste and degreasing and solidifying the outer peripheral coat layer paste and the adhesive layer paste is less than 500 °C, the condensation polymerization of the inorganic particles and/or inorganic fibers contained in the honeycomb units and the outer peripheral coat layer and/or the adhesive layer paste through the inorganic binders is prevented from progressing, thus causing the problems of removal of the outer peripheral coat layer and reduction in the joining strength of the adhesive layer. On the other hand, if the temperature for drying the outer peripheral coat layer paste and degreasing and solidifying the outer peripheral coat layer paste and the adhesive layer paste is exceeds 900 °C, in the case where the inorganic particles contained in the honeycomb units are, for example, zeolite, the sintering of zeolite progresses to reduce reaction sites that contribute to conversion of exhaust gas, so that the exhaust gas conversion performance is reduced.

### [Examples]

A description is given below of examples of the present invention.

### [Example 1]

First, paste for honeycomb unit molded bodies was prepared by mixing 3000 parts by weight of zeolite particles (having an average particles size of 2 µm and a specific surface area of 250 m²/g), 650 parts by weight of alumina fibers (6 µm in average fiber diameter and 100 µm in average fiber length), 840 parts by weight of an inorganic binder (boehmite), 330 parts by weight of an organic binder (methylcellulose), 330 parts by weight of a lubricant, and 1800 parts by weight of ion-exchanged water as raw materials.

Next, multiple honeycomb unit molded bodies having a rectangular pillar shape as illustrated in FIG. 2 were obtained by performing extrusion molding with an extruder using this paste.

Next, these molded bodies were sufficiently dried using a microwave drying apparatus and a hot air drying apparatus, and were degreased, being held at 400 °C for 2 hours. Thereafter, these molded bodies were fired, being held at 700 °C for 2 hours, so that honeycomb units (35 mm square and 200 mm in overall length) were obtained. The cell walls of the honeycomb units were 0.2 mm in thickness, and the cell density of the honeycomb units was 124 cells/cm².

Further, adhesive layer paste was prepared. The adhesive layer paste was made by mixing 520 parts by weight of silica particles, 160 parts by weight of silica-alumina fibers, 290 parts by weight of an inorganic binder (silica sol of a solids content of 30 wt%), 2 parts by weight of an organic binder (carboxymethylcellulose), and 5 parts by weight of ion-exchanged water.

Next, the entire joining side surface of each of two honeycomb units was impregnated with water. The joining side surfaces of the honeycomb units were impregnated with water by spraying. The water content is 1.0 g per honeycomb unit joining side surface (0.014 g/cm²).

Next, the adhesive layer paste prepared by the above-described method was applied on the entire joining side surface of one of the two honeycomb units, and the joining side surfaces of the two honeycomb units were tightly bonded. The adhesive layer paste is 1.0 mm in thickness.

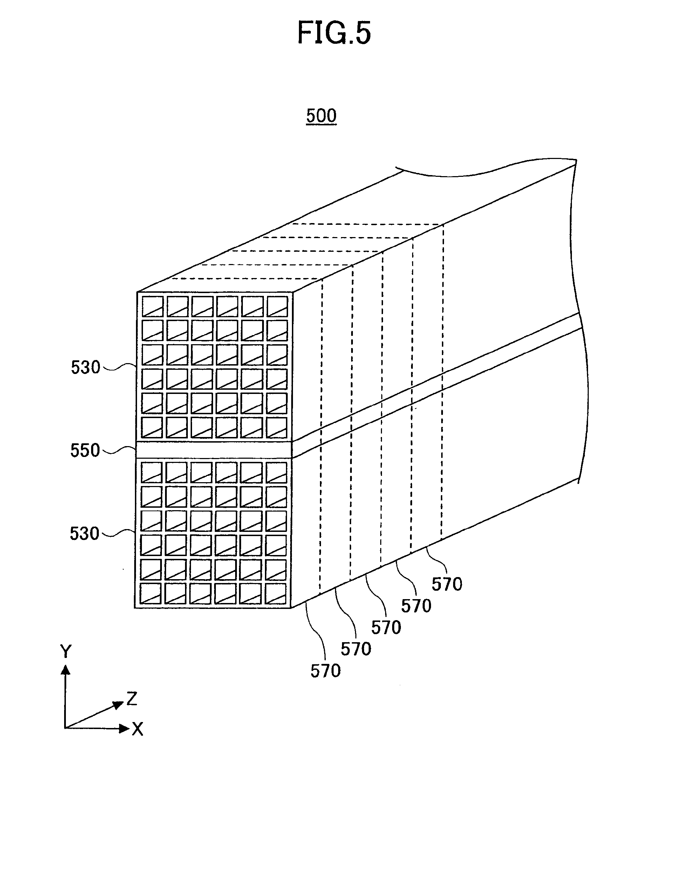

The two honeycomb units having their respective joining side surfaces tightly bonded in this state were held in a hot air drying apparatus set at 130 °C for 10 minutes. Thereafter, the two honeycomb units having their respective joining side surfaces tightly bonded were put in a drying apparatus, where the temperature was raised from room temperature to 600 °C at a rate of 5 °C per minute, and were held at 600 °C for 1 hour. As a result, an assembly 500 (FIG. 5) into which two honeycomb units 530 were joined by interposing an adhesive layer 550 was obtained.

In external appearance, no cavities were observed near the center part of the adhesive layer 550 of the honeycomb unit assembly 500. The presence or absence of cavities in the adhesive layer 550 was visually confirmed.

Next, as illustrated in FIG. 5, the obtained assembly 500 was cut at intervals of 10 mm along a direction perpendicular to the lengthwise direction (Z direction) of the assembly 500, so that 20 test pieces 570 (size: 71 mm in length, 35 mm in width, and 10 mm in thickness) according to Example 1 were manufactured.

### [Evaluation]

The joining strength in the part of the adhesive layer 550 was measured using the obtained test pieces 570 according to Example 1.

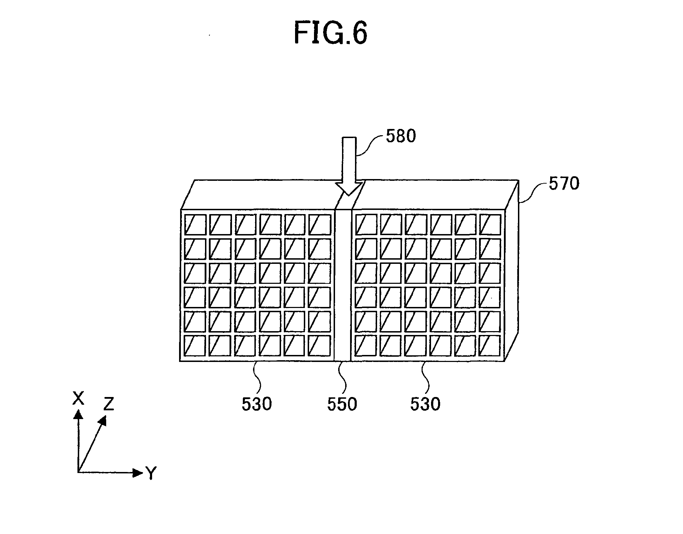

FIG. 6 schematically illustrates a joining strength evaluation test using the test pieces 570.

The joining strength was measured as follows. First, as illustrated in FIG. 6, the test piece 570 according to Example 1 is placed so that the cells extend horizontally (in the Z direction) and the adhesive layer 550 is visible at the top.

Next, a load 580 is applied from above this test piece 570 to the center part of the adhesive layer 550 using a compression tester (a product of INSTRON). The load 580 is gradually increased and the strength at the time when the test piece 570 is broken (breaking strength) is determined. This was performed on the 20 test pieces 570, and the average of the breaking strengths was determined as joining strength (MPa).

The measurement result of joining strength is shown in Table 1. Table 1 shows the material composition of the paste for honeycomb unit molded bodies and the water content of the joining side surfaces in manufacturing the test pieces 570 together with the measurement result.

**Table 1**

| | BLENDING RATIO (PARTS BY WEIGHT) OF HONEYCOMB UNIT MOLDED BODY | | | | | | WATER CONTENT | | JOINING STRENGTH (MPa) |
|---|---|---|---|---|---|---|---|---|---|
| SAMPLE | ZEOLITE | ALUMINA FIBERS | INORGANIC BINDER | ORGANIC BINDER | LUBRICANT | ION-EXCHANGED WATER | (g) | (g/cm²) | |
| EXAMPLE 1 | 3000 | 650 | 840 | 330 | 330 | 1800 | 1.0 | 0014 | 0.58 |
| EXAMPLE 2 | 3000 | 650 | 840 | 330 | 330 | 1800 | 3.0 | 0.043 | 0.65 |
| EXAMPLE 3 | 3000 | 650 | 840 | 330 | 330 | 1800 | 0.5 | 0007 | 0.37 |
| EXAMPLE 4 | 2500 | 800 | 900 | 330 | 330 | 1800 | 07 | 0.010 | 0.50 |
| EXAMPLE 5 | 3000 | 550 | 800 | 330 | 330 | 1800 | 3.5 | 0.050 | 0.64 |
| COMPARATIVE EXAMPLE 1 | 3000 | 650 | 840 | 330 | 330 | 1800 | - | - | 0.20 |

From Table 1, the joining strength of the test pieces 570 according to Example 1 is 0.58 MPa, which shows that a good joining strength is obtained.

### [Example 2]

Twenty test pieces according to Example 2 were manufactured in the same manner as in Example 1. In Example 2, however, the water content of the joining side surfaces of honeycomb units was 3.0 g per honeycomb unit joining side surface (0.043 g/cm²). The other manufacturing conditions are the same as in Example 1. In external appearance, no cavities were observed near the center part of the adhesive layer of the obtained assembly.

The joining strength was measured using the test pieces according to Example 2.

The obtained result is shown in Table 1 described above. From Table 1, the joining strength of the test pieces according to Example 2 is 0.65 MPa, which shows that a good joining strength is obtained.

### [Example 3]

Twenty test pieces according to Example 3 were manufactured in the same manner as in Example 1. In Example 3, however, the water content of the joining side surfaces of honeycomb units was 0.5 g per honeycomb unit joining side surface (0.007 g/cm²). The other manufacturing conditions are the same as in Example 1. In external appearance, no cavities were observed near the center part of the adhesive layer of the obtained assembly.

The joining strength was measured using the test pieces according to Example 3.

The obtained result is shown in Table 1 described above. From Table 1, the joining strength of the test pieces according to Example 3 is 0.37 MPa, which shows that a good joining strength is obtained.

### [Example 4]

Twenty test pieces according to Example 4 were manufactured in the same manner as in Example 1. In Example 4, however, the paste for honeycomb unit molded bodies was prepared by mixing 2500 parts by weight of zeolite particles (having an average particles size of 2 µm and a specific surface area of 250 m²/g), 800 parts by weight of alumina fibers (6 µm in average fiber diameter and 100 µm in average fiber length), 900 parts by weight of an inorganic binder (boehmite), 330 parts by weight of an organic binder (methylcellulose), 330 parts by weight of a lubricant, and 1800 parts by weight of ion-exchanged water.

Further, in Example 4, the water content of the joining side surfaces of honeycomb units was 0.7 g per honeycomb unit joining side surface (0.010 g/cm²). The other manufacturing conditions are the same as in Example 1. In external appearance, no cavities were observed near the center part of the adhesive layer of the obtained assembly.

The joining strength was measured using the test pieces according to Example 4.

The obtained result is shown in Table 1 described above. From Table 1, the joining strength of the test pieces according to Example 4 is 0.50 MPa, which shows that a good joining strength is obtained.

### [Example 5]

Twenty test pieces according to Example 5 were manufactured in the same manner as in Example 1. In Example 5, however, the paste for honeycomb unit molded bodies was prepared by mixing 3000 parts by weight of zeolite particles (having an average particles size of 2 µm and a specific surface area of 250 m²/g), 550 parts by weight of alumina fibers (6 µm in average fiber diameter and 100 µm in average fiber length), 800 parts by weight of an inorganic binder (boehmite), 330 parts by weight of an organic binder (methylcellulose), 330 parts by weight of a lubricant, and 1800 parts by weight of ion-exchanged water.

Further, in Example 5, the water content of the joining side surfaces of honeycomb units was 3.5 g per honeycomb unit joining side surface (0.050 g/cm²). The other manufacturing conditions are the same as in Example 1. In external appearance, no cavities were observed near the center part of the adhesive layer of the obtained assembly.

The joining strength was measured using the test pieces according to Example 5.

The obtained result is shown in Table 1 described above. From Table 1, the joining strength of the test pieces according to Example 5 is 0.64 MPa, which shows that a good joining strength is obtained.

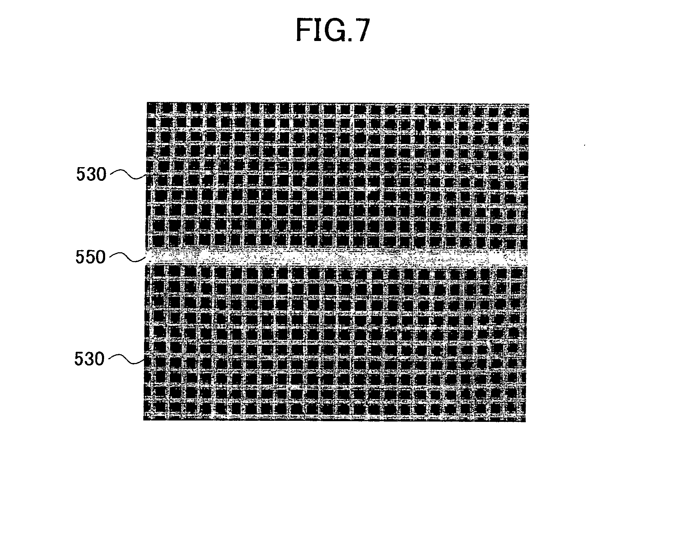

FIG. 7 illustrates a photograph of a cross section of the part of the adhesive layer 550 of the honeycomb structure (Example 1) of the present invention. In Example 1, as illustrated in FIG. 7, no cavities were observed in the adhesive layer 550. As in Example 1, no cavities were observed in Examples 2 through 5, either.

### [Comparative Example 1]

Honeycomb units according to Comparative Example 1 were manufactured in the same process as in Example 1. In Comparative Example 1, however, the joining side surfaces of the honeycomb units were not subjected to the water impregnation process. The other manufacturing conditions are the same as in Example 1.

FIG. 3 illustrates a photograph of a cross section of the part of the adhesive layer of the conventional honeycomb structure (Comparative Example 1).

It is found from the observation of the external appearance of the obtained assembly that cavities such as the cavities 151 are caused in the adhesive layer 150'.

The joining strength was measured using the test pieces according to Comparative Example 1.

The obtained result is shown in Table 1 described above. From Table 1, the joining strength of the test pieces according to Comparative Example 1 is 0.20 MPa, which shows that no good joining strength is obtained.

These measurement results show that by impregnating the joining side surfaces of honeycomb units in advance with water, an adhesive layer with few cavities is finally obtained, which improves the joining strength.

The comparison of Example 2 (a water content of 0.043 g/cm²) and Example 5 (a water content of 0.050 g/cm²) shows that when the amount of water provided on the joining side surfaces of honeycomb units is more than or equal to 0.043 g/cm², the joining strength improving effect peaks out, and an increase in the amount of water does not change the joining strength any further.

Accordingly, it is believed from the results of Examples 1 to 5 that the amount of water provided on the joining side surfaces of honeycomb units is preferably in the range of 0.007 g/cm² to 0.050 g/cm². Further, in view of the operational efficiency, it is believed to be preferable that the amount of water provided on the joining side surfaces of honeycomb units be at most 0.04 g/cm² to 0.05 g/cm² per honeycomb unit joining side surface.

According to the present invention, the specific surface area of inorganic particles may be determined by the multipoint BET (Brunauer-Emmett-Teller) method, and the average pore size of a honeycomb unit may be determined by mercury intrusion porosimetry.

## Claims

1. A method of manufacturing a honeycomb structure including a plurality of honeycomb units, the honeycomb units each containing inorganic particles and having a plurality of cells extending from a first end face to a second end face of the honeycomb unit along a longitudinal direction thereof and separated by a plurality of cell walls, the method **characterized by** the steps of:
(a) preparing the honeycomb units each having at least one joining surface on which adhesive layer paste is to be provided;
(b) impregnating at least a part of the at least one joining surface of each of the honeycomb units with water;
(c) preparing the adhesive layer paste containing at least inorganic particles, a binder, and water;
(d) applying the adhesive layer paste on the at least one joining surface of at least one of the honeycomb units and joining the honeycomb units to each other; and
(e) forming an adhesive layer by drying, degreasing, and solidifying the adhesive layer paste,
wherein the inorganic particles of the honeycomb units have a specific surface area of 50 m²/g or more, and
the water with which at least the part of the at least one joining surface of each of the honeycomb units is impregnated in said step (b) is removed in said step (e).

2. The method of manufacturing a honeycomb structure as claimed in claim 1, **characterized in that** the at least one joining surface of each of the honeycomb units is entirely impregnated with the water in said step (b).

3. The method of manufacturing a honeycomb structure as claimed in claim 1 or 2, **characterized in that** an amount of the water with which each of the honeycomb units is impregnated in said step (b) is 0.01 g/cm² to 0.05 g/cm² per joining surface of each of the honeycomb units.

4. The method of manufacturing a honeycomb structure as claimed in any of claims 1 to 3, **characterized in that** said step (b) is performed by spraying each of the honeycomb units with the water.

5. The method of manufacturing a honeycomb structure as claimed in any of claims 1 to 4, **characterized in that** the inorganic particles contained in the honeycomb units contain zeolite.

6. The method of manufacturing a honeycomb structure as claimed in any of claims 1 to 5,
**characterized in that** the honeycomb units have an average pore size of 0.01 µm to 1.0 µm.

7. The method of manufacturing a honeycomb structure as claimed in any of claims 1 to 6,
**characterized in that** the inorganic particles of the adhesive layer paste contain alumina particles or silica particles.

8. The method of manufacturing a honeycomb structure as claimed in any of claims 1 to 7,
**characterized in that** the adhesive layer paste further contains inorganic fibers.

9. The method of manufacturing a honeycomb structure as claimed in any of claims 1 to 8,
**characterized in that** the adhesive layer paste is solidified at a temperature of 500 °C to 900 °C in said step (e).

## Patentansprüche

1. Verfahren zur Herstellung einer Wabenstruktur, die eine Mehrzahl von Wabeneinheiten einschließt, wobei die Wabeneinheiten jeweils anorganische Partikel enthalten und eine Mehrzahl von Zellen aufweisen, die sich von einer ersten Endfläche zu einer zweiten Endfläche der Wabeneinheit entlang einer Längsrichtung davon erstrecken und durch eine Mehrzahl von Zellwänden getrennt sind, wobei das Verfahren durch die folgenden Schritte gekennzeichnet ist:
(a) Herstellen der Wabeneinheiten, die jeweils mindestens eine Verbindungsfläche haben, auf der eine Adhäsivschicht-Paste bereitgestellt werden soll;
(b) Imprägnieren mindestens eines Teils der mindestens einen Verbindungsfläche jeder Wabeneinheit mit Wasser;
(c) Zubereiten der Adhäsivschicht-Paste, die mindestens anorganische Partikel, ein Bindemittel und Wasser enthält;
(d) Aufbringen der Adhäsivschicht-Paste auf die mindestens eine Verbindungsfläche mindestens einer der Wabeneinheiten und miteinander Verbinden der Wabeneinheiten; und
(e) Bilden einer Adhäsivschicht durch Trocknen, entfetten und Verfestigen der Adhäsivschicht-Paste,
worin die anorganischen Partikel der Wabeneinheiten eine spezifische Oberfläche von 50 m²/g oder mehr haben, und
das Wasser, mit dem zumindest der Teil der mindestens einen Verbindungsfläche einer jeden Wabeneinheit in Schritt (b) imprägniert wird, in Schritt (e) entfernt wird.

2. Verfahren zur Herstellung einer Wabenstruktur gemäß Anspruch 1, **dadurch gekennzeichnet, dass** die mindestens eine Verbindungsfläche einer jeden Wabeneinheit in Schritt (b) vollständig mit Wasser imprägniert wird.

3. Verfahren zur Herstellung einer Wabenstruktur gemäß Anspruch 1 oder 2, **dadurch gekennzeichnet, dass** die Menge des Wassers, mit dem jede der Wabeneinheiten in Schritt (b) imprägniert wird, 0,01 g/cm² bis 0,05 g/cm² pro Verbindungsfläche von jeder der Wabeneinheiten ist.

4. Verfahren zur Herstellung einer Wabenstruktur gemäß irgendeinem der Ansprüche 1 bis 3, **dadurch gekennzeichnet, dass** Schritt (b) durch Besprühen jeder der Wabeneinheiten mit Wasser durchgeführt wird.

5. Verfahren zur Herstellung einer Wabenstruktur gemäß irgendeinem der Ansprüche 1 bis 4, **dadurch gekennzeichnet, dass** die in den Wabeneinheiten enthaltenen anorganischen Partikel Zeolith enthalten.

6. Verfahren zur Herstellung einer Wabenstruktur gemäß irgendeinem der Ansprüche 1 bis 5, **dadurch gekennzeichnet, dass** die Wabeneinheiten eine mittlere Porengröße von 0,01 µm bis 1,0 µm haben.

7. Verfahren zur Herstellung einer Wabenstruktur gemäß irgendeinem der Ansprüche 1 bis 6, **dadurch gekennzeichnet, dass** die anorganischen Partikel der Adhäsivschicht-Paste Aluminiumoxidpartikel oder Siliziumdioxidpartikel enthalten.

8. Verfahren zur Herstellung einer Wabenstruktur gemäß irgendeinem der Ansprüche 1 bis 7, **dadurch gekennzeichnet, dass** die Adhäsivschicht-Paste weiterhin anorganische Fasern enthält.

9. Verfahren zur Herstellung einer Wabenstruktur gemäß irgendeinem der Ansprüche 1 bis 8, **dadurch gekennzeichnet, dass** die Adhäsivschicht-Paste in Schritt (e) bei einer Temperatur von 500°C bis 900°C verfestigt wird.

## Revendications

1. Procédé de fabrication d'une structure en nid d'abeilles incluant une pluralité d'unités en nid d'abeilles, les unités en nid d'abeilles contenant chacune des particules inorganiques et ayant une pluralité de cellules s'étendant depuis une première face d'extrémité jusqu'à une seconde face d'extrémité de l'unité en nid d'abeilles le long d'une direction longitudinale de cette dernière et séparées par une pluralité de parois de cellule, le procédé étant **caractérisé par** les étapes de :
(a) préparation des unités en nid d'abeilles chacune ayant au moins une surface de jonction sur laquelle une pâte de couche adhésive doit être déposée ;
(b) imprégnation d'au moins une partie de l'au moins une surface de jonction de chacune des unités en nid d'abeilles avec de l'eau ;
(c) préparation de la pâte de couche adhésive contenant au moins des particules inorganiques, un liant et de l'eau ;
(d) application de la pâte de couche adhésive sur l'au moins une surface de jonction d'au moins une des unités en nid d'abeilles et jonction des unités en nid d'abeilles les unes aux autres ; et
(e) formation d'une couche adhésive par séchage, dégraissage et solidification de la pâte de couche adhésive ;
dans lequel les particules inorganiques des unités en nid d'abeilles ont une superficie spécifique de 50 m²/g ou plus, et
l'eau avec laquelle au moins la partie de l'au moins une surface de jonction de chacune des unités en nid d'abeilles est imprégnée dans ladite étape (b) est enlevée dans ladite étape (e).

2. Procédé de fabrication d'une structure en nid d'abeilles selon la revendication 1, **caractérisé en ce que** l'au moins une surface de jonction de chacune des unités en nid d'abeilles est entièrement imprégnée avec de l'eau dans ladite étape (b).

3. Procédé de fabrication d'une structure en nid d'abeilles selon la revendication 1 ou 2, **caractérisé en ce qu'**une quantité de l'eau avec laquelle chacune des unités en nid d'abeilles est imprégnée dans ladite étape (b) est de 0,01 g/cm² à 0,05 g/cm² par surface de jonction de chacune des unités en nid d'abeilles.

4. Procédé de fabrication d'une structure en nid d'abeilles selon l'une quelconque des revendications 1 à 3, **caractérisé en ce que** ladite étape (b) est effectuée en pulvérisant de l'eau sur chacune des unités en nid d'abeilles.

5. Procédé de fabrication d'une structure en nid d'abeilles selon l'une quelconque des revendications 1 à 4, **caractérisé en ce que** les particules inorganiques contenues dans les unités en nid d'abeilles contiennent de la zéolithe.

6. Procédé de fabrication d'une structure en nid d'abeilles selon l'une quelconque des revendications 1 à 5, **caractérisé en ce que** les unités en nid d'abeilles ont une taille de pore moyenne de 0,01 µm à 1,0 µm.

7. Procédé de fabrication d'une structure en nid d'abeilles selon l'une quelconque des revendications 1 à 6, **caractérisé en ce que** les particules inorganiques de la pâte de couche adhésive contiennent des particules d'alumine ou des particules de silice.

8. Procédé de fabrication d'une structure en nid d'abeilles selon l'une quelconque des revendications 1 à 7, **caractérisé en ce que** la pâte de couche adhésive contient en outre des fibres inorganiques.

9. Procédé de fabrication d'une structure en nid d'abeilles selon l'une quelconque des revendications 1 à 8, **caractérisé en ce que** la pâte de couche adhésive est solidifiée à une température de 500 °C à 900 °C dans ladite étape (e).
